Europäisches Patentamt

(19) European Patent Office

Office européen des brevets

(11) Publication number: **0 165 632 B1**

## EUROPEAN PATENT SPECIFICATION

(45) Date of publication of patent specification: **04.09.91**

(51) Int. Cl.⁵: **G02B 6/44**

(21) Application number: **85200818.4**

(22) Date of filing: **22.05.85**

Divisional application 87201544 filed on 14.08.87.

(54) **Optical flat type cable, method of manufacturing same, and an optical cable composed of several flat type cables.**

(30) Priority: **23.05.84 NL 8401642**
**29.11.84 NL 8403629**

(43) Date of publication of application:
**27.12.85 Bulletin 85/52**

(45) Publication of the grant of the patent:
**04.09.91 Bulletin 91/36**

(84) Designated Contracting States:
**AT DE FR GB IT NL SE**

(56) References cited:
**EP-A- 0 104 864          EP-A- 0 131 058**
**DE-A- 1 572 857          FR-A- 2 276 410**
**FR-A- 2 393 327          GB-A- 2 106 266**
**US-A- 4 147 407**

**THE TRANSACTIONS OF THE IECE OF JA-
PAN, vol. E 63, no. 8, August 1980, pages
615-616, Tokyo, JP; R. YAMAUCHI et al.:
"Residual stresses of fibers in tape-type op-
tical cable and their reduction"**

**PATENTS ABSTRACTS OF JAPAN, vol. 7, no.
196, 26th August 1983, page 11 P 219; & JP -
A - 58 93 006 (MITSUBISHI RAYON K.K.)
02-06-1983**

(73) Proprietor: **N.V. Philips' Gloeilampenfabrieken
Groenewoudseweg 1
NL-5621 BA Eindhoven(NL)**

(72) Inventor: **Van der Velde, Hendrik Simon
c/o INT. OCTROOIBUREAU Prof. Holstlaan 6
NL-5656 AA Eindhoven(NL)**
Inventor: **Schildbach, Klaus Benno
c/o INT. OCTROOIBUREAU Prof. Holstlaan 6
NL-5656 AA Eindhoven(NL)**
Inventor: **Van der Maaden, Johan
c/o INT. OCTROOIBUREAU Prof. Holstlaan 6
NL-5656 AA Eindhoven(NL)**

(74) Representative: **Weening, Cornelis et al
INTERNATIONAAL OCTROOIBUREAU B.V.
Prof. Holstlaan 6
NL-5656 AA Eindhoven(NL)**

## Description

The invention relates to an optical flat type cable consisting of several parallelly extending optical fibres situated in a flat plane and bonded together by a bonding material which is present only on the facing circumferential parts of the optical fibres.

Such a cable is known from US 4,147,407. Due to the applied bonding method the bonding material which interconnects the facing circumferential parts of the optical fibres of this prior art flat type cable is constituted by the same material as that constitutive of the fibre coatings. Factually, said bonding material is provided by said coating.

Another cable is known from the German Offenlegungsschrift 27.24.536, page 2, first paragraph. It is stated that, although the cable has a good flexibility, it has on the other hand a low strength and breaks easily. It is suggested in the above-mentioned German offenlegungsschrift to provide each fibre with a fixed or loose protecting cover and to provide thereon a cover of a soft synthetic resin. The fibres are interconnected via the cover of the soft synthetic resin. A cable comprising optical fibres which are provided with such a fixed synthetic cover is f.i. disclosed in U.S. Patent Specification 4,147,407. In this case, the covers are bridged together by solvent welding. If desired, an adhesive may also be used.

The use of extra covers, such as that of the soft synthetic resin, causes the manufacture of the optical flat type cable to consume more time and effort and hence to become more expensive. Also the fibres are subjected to an extra mechanical and temperature load. Moreover, as a result of the extra covers, extra forces are required, for example, when the cable is bended, resulting into an extra signal loss and tension-corrosion.

It is the object of the invention to provide an optical flat type cable in which the optical fibres as supplied by the manufacturer are processed directly into a cable, hence without (an) extra cover-(s).

Another object of the invention is to provide an optical flat type cable which is very flexible and moreover has a good mechanical strength.

According to still another object an optical flat type cable is provided in which the signal loss of the optical fibres as a result of the processing to form a flat type cable, is extremely low.

According to the invention these objects are achieved by means of an optical flat type cable of the type mentioned in the opening paragraph which is characterized in that said bonding material is a light cured lacquer of acrylic acid esters, said lacquer prior to curing comprising an urethane acrylate, epoxy acrylate, polyester acrylates of mixtures these of

The optical fibres in the cable according to the invention engage each other or engage each other substantially. This means that the spacing between the fibres is at most 10 $\mu$m.

The lacquer of acrylic acid esters, prior to curing, comprise a mixture of mono-, di-, tri- and/or tetra-esters of acrylic acid to which other light-curable ingredients such as N-vinylpyrrolidone may have been added. The lacquer comprises an initiator, for example, a benzoin isobutyl ether which is commercially available under the trade name Irgacure. With the optical flat type cable according to the invention an optical cable can be constructed which comprises a pack of a number of stacked optical flat type cables, which pack is twisted about its longitudinal axis and is surrounded by a loose tubular cover. The cover is usually a tube of a synthetic resin. The cover may comprise reinforcing elements, such as longitudinally extending reinforcing wires or reinforcing fibres, for example, polyaramide fibres, or steel wires. Further protective covers or an armouring may be provided around the cover. Several optical cables may also be grouped together and be provided with one or more common covers or a common armouring. Such a construction is known per se from the UK Patent Application No. 2.106.266 A.

It may be observed that a local interconnection of an array of plastic optical fibres made of methacrylic resin is known from the Japanese Patent Application 58 93 006. There, both end parts of a bundle of fibres are covered by a light curable lacquer, such as by dipping. In this way, however, no well-defined flat cable can be produced. Moreover, in the end parts, the fibres are fully surrounded with lacquer. When a uniform array of fibres is treated in this way over the whole length, the resulting flat cable will show extra signal loss. The method disclosed in the Japanese Patent Application is only suitable in case that a loose bundle of parallelly extending optical fibres of relatively short lengths must be kept together at the end parts in order to enable further processing, such as contacting.

The optical cable of the invention excels by its simple construction good flexibility, good transmission quality and cheap method of manufacture and hence is very suitable for practical use on a large scale.

The invention will be described in greater detail with reference to the drawing, in which

Figure 1 is a cross-sectional view of an optical flat type cable according to the invention,

Figure 2 shows an optical cable constructed with the optical flat type cables according to the invention.

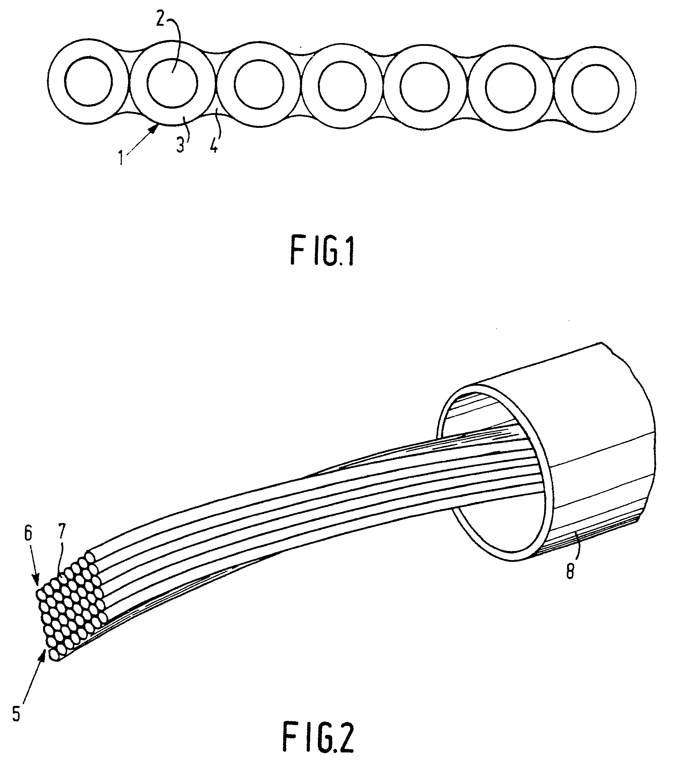

Reference numeral 1 in Figure 1 denotes an optical fibre (glass fibre) as it is marketed by the manufacturer of optical fibres. The optical fibre 1 always consists of a glass fibre 2 which has been provided by the manufacturer with a protective layer 3, the so-called primary coating, which is usually manufactured from U.V.-light-cured acrylates. The primary coating 3 may consist of one or two layers. Without the primary coating, the optical fibre would be damaged very rapidly, so that the glass (optical) fibre 2,,mmediately after the manufacture thereof, is provided with the thin protective layer 3. The thickness of the primary coating 3 is approximately 62 $\mu$m. The optical (glass) fibre 2 has a diameter of 125 $\mu$m.

The .optical fibres 1 are interconnected by a light-cured lacquer 4 of acrylic acid esters which is present only on the facing parts of the fibres 1. At the area of the lacquer 4 the fibres 1 engage each other or engage each other substantially. Examples of suitable lacquer compositions (prior to curing) are:

a) 250% by weight of expoxyacrylate (75% by weight solution in tripropylene glycol diacrylate),
35% by weight of aromatic urethane acrylate,
16% by weight of tripropylene glycol diacrylate,
16% by weight of unsaturated tertiary amine (co-initiator)
8% by weight of benzophenone (initiator).
b) 30% by weight of epoxyacrylate (75% solution in tripropylene glycol diacrylate),
40% by weight of aromatic urethane acrylate,
25% by weight of tripropylene glycol diacrylate,
1% by weight of ethanol
4% by weight of benzildimethyl ketal (initiator),
c) 58% by weight of chlorinated polyester (60% solution in 1,6-hexanediol diacrylate)
38% by weight of semi-ester of phtalic acid and hydroxy ethyl acrylate,
4% by weight of benzildimethyl ketal (initiator).

Reference numeral 5 in Figure 2 denotes a pack of eight stacked flat type cables 6. Each flat type cable 6 is in conformity with Fig. 1 with the proviso that six optical fibres 7 are incorporated in each flat type cable 6. The pack 5 is twisted about its longitudinal axis and is enveloped by a loose tubular cover 8. Cover 8 is manufactured, for example, from metal. Cover 8 is preferably manufactured from a synthetic resin which has been formed into a tube by means of an extrusion process. The pack 5 is loose in cover 8. The pack has a cross-section of, for example 2.5 x 2.5 mm and the cover 8 has a inside diameter of, for example, 6-10 mm.

The flat cable according to the invention is very flexible, has a good mechanical rigidity and shows an extremely low signal loss with respect to loose optical fibres (not processed to form a flat cable) of 0,09 dB per km.

## Claims

1. An optical flat type cable consisting of several parallelly extending optical fibres situated in a flat plane and bonded together by a bonding material which is present only on the facing circumferential parts of the optical fibres characterized in that said bonding material is a light-cured lacquer of acrylic acid esters, said lacquer prior to curing comprising an urethane acrylate, epoxy acrylate, polyester acrylate or mixtures thereof.

## Revendications

1. Câble optique plat constitué par plusieurs fibres optiques parallèles situées dans un plan et liées entre elles à l'aide de matériau de soudage qui n'est présent que sur les parties circonférentielles situées en vis-à-vis des fibres optiques, caractérisé en ce que ledit matériau de soudage est un vernis d'esters d'acide acrylique durci à l'aide de lumière, ledit vernis utilisé préalablement pour le durcissement contenant un acrylate d'uréthane, un acrylate époxy, un acrylate de polyester ou leurs mélanges.

## Patentansprüche

1. Optisches Bandkabel, das aus mehreren sich parallel zueinander erstreckenden optischen Fasern besteht, die in einer Ebene liegen und durch ein nur an den einander zugewandten Umfangsteilen der optischen Fasern vorhandenes Verbindungsmittel miteinander verbunden sind, **dadurchgekennzeichnet.** daß das genannte Verbindungsmaterial ein lichtgehärteter Lack aus Acrylsäure-Estern ist, der vor dem Aushärten ein Urethanacrylat, Epoxyacrylat, Polystyrolacrylat oder Gemische derselben aufweist.

FIG.1

FIG.2